# EUROPÄISCHE PATENTSCHRIFT

(11) **EP 1 993 297 B1**
(45) Veröffentlichungstag und Bekanntmachung des Hinweises auf die Patenterteilung: **12.07.2017**
(21) Anmeldenummer: 08008496.5
(22) Anmeldetag: 06.05.2008
(51) Int. Cl.: H04Q 1/14

(54) **Verteilerblock einer Telekommunikationseinrichtung**
Distribution block of a telecommunication device
Bloc répartiteur d'un dispositif de télécommunication

(30) Priorität: 18.05.2007 DE 202007007208 U
(43) Veröffentlichungstag der Anmeldung: 19.11.2008
(73) Patentinhaber: CCS Technology, Inc., Wilmington, DE 19803 (US)
(72) Erfinder: Badura, Stefan, Dipl.-Ing., 58708 Menden (DE); Breuer-Heckel, Mike, Dipl.-Ing., DE/44143 Dortmund (DE)
(74) Vertreter: Sturm, Christoph

(56) Entgegenhaltungen:
- WO-A1-2007/090488
- DE-C1- 19 711 128
- DE-U1-202006 002 083

## Beschreibung

Die Erfindung betrifft einen Verteilerblock einer Tetekommunikationseinrichtung gemäß dem Oberbegriff des Anspruchs 1.

Aus dem Produktkatalog "Anschluss- und Verteilersysteme, Ausgabe 1, Seiten 17 bis 23, Jahr 2000, Corning Cable Systems GmbH & Co. KG" ist ein Verteilerblock einer Telekommunikationseinrichtung bekannt. Der auf Seiten 17 bis 21 dieses Produktkatalogs offenbarte Verteilerblock verfügt über mehrere Verteilerleisten, die sandwichartig übereinander in einer Aufnahmewanne des Verteilerblocks angeordnet sind. Die Verteilerleisten umfassen Anschlusselemente für den Anschluss signalführender Adern eines Telekommunikationskabels, wobei diese signalführenden Adern auch als a-Adern und b-Adern bezeichnet werden. Über Drahtführungskanäle umfassende Drahtführungselemente können die signalführenden Adern des Telekommunikationskabels den Anschlusselementen zugeführt werden, um an denselben angeschlossen zu werden. Die Funktionselemente umfassen hierzu sogenannte a-Anschlüsse sowie b-Anschlüsse für die signalführenden a-Adern und b-Adern der Telekommunikationskabel.

Sollen über Telekommunikationskabel Signale mit hohen Datenübertragungsraten übertragen werden, so weisen dieselben neben den signalführenden Adern auch nicht-signalführende Schirmungsadern auf, wobei die Schirmungsadern auch als s-Adern bezeichnet werden. So zeigen Seiten 22 und 23 des oben genannten Produktionskatalogs einen Verteilerblock, dessen Anschlusselemente neben a-Anschlüssen und b-Anschlüssen auch s-Anschlüsse umfassen, an welche die s-Adern eines Telekommunikationskabels angeschlossen werden können.

Aus der WO 2006/094570 ist ein Verteilerblock einer Telekommunikationseinrichtung bekannt, in den xDSL-Splittereinrichtungen integriert sind. Bei diesen xDSL-Splittereinrichtungen kann es sich um ADSL-Splittereinrichtungen oder auch um VDSL-Splittereinrichtungen handeln, wobei die Splittereinrichtungen einerseits dem Zusammenführen getrennter Sprachdatensignale und Rechnerdatensignale in kombinierte Sprachdaten/Rechnerdaten-Signale und andererseits dem Trennen kombinierter Sprachdaten/Rechnerdaten-Signale in getrennte Sprachdatensignale und Rechnerdatensignale dienen. Die WO 2006/094570 schlägt verschiedene Schirmungsmaßnahmen vor, um unerwünschtes Nahnebensprechen zwischen unterschiedlichen Teilnehmern zu verbessern.

Ein Verteilerblock mit den Merkmalen des Oberbegriffs des Anspruchs 1 ist aus der DE 20 2006 002083 U1 bekannt.

Bei den bekannten Verteilerblöcken mit s-Anschlüssen aufweisenden Anschlusselementen sind die s-Anschlüsse der Anschlusselemente der Verteilerleisten über Schirmungselemente mit der Aufnahmeeinrichtung des Verteilerblocks elektrisch leitend verbunden, wobei jedes Schirmungselement die den s-Anschlüssen zugeordneten bzw. die dieselben bereitstellenden Kontaktfedern der Anschlusselemente einer Verteilerleiste an einem hinteren, von einer Vorderseite der Verteilerleiste maximal beabstandeten Abschnitt kontaktiert. Insbesondere bei der Übertragung von VDSL-Diensten mit hohen Übertragungsfrequenzen stellt sich trotzt der bereits aus dem Stand der Technik bekannten Schirmungsmaßnahmen ein unerwünschtes Nahnebensprechen ein. Hierdurch wird die Übertragungsqualität beeinträchtigt.

Hiervon ausgehend liegt der vorliegenden Erfindung das Problem zu Grunde, einen neuartigen Verteilerblock einer Telekommunikationseinrichtung zu schaffen, bei welchem unerwünschtes Nahnebensprechen weiter reduziert werden kann.

Dieses Problem wird dadurch gelöst, dass der eingangs genannte Verteilerblock durch die Merkmale des kennzeichnenden Teils des Anspruchs 1 weitergebildet ist.

Im Sinne der hier vorliegenden Erfindung wird vorgeschlagen, dass Schirmungselemente, welche die s-Anschlüsse der Anschlusselemente bzw. der Verteilerleisten mit der Aufnahmeeinrichtung des Verteilerblocks elektrisch leitend verbinden, Kontaktfedern, welche s-Anschlüsse der Anschlusselemente bzw. der jeweiligen Verteilerleiste bereitstellen, in einem Bereich kontaktieren, der zwischen der Vorderseite der jeweiligen Verteilerleiste und den von den Kontaktfedern der jeweiligen Verteilerleiste gebildeten Trennkontakten liegen. Von der Vorderseite der Verteilerleiste aus gesehen, kontaktiert demnach jedes Schirmungselement den s-Anschlüssen zugeordnete bzw. dieselben bereitstellende Kontaktfedern vor den von den Kontaktfedern gebildeten Trennkontakten. Hierdurch kann Nahnebensprechen deutlich reduziert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine Verteilerleiste eines erfindungsgemäßen Verteilerblocks zusammen mit einer Schirmungseinrichtung in perspektivischer Ansicht nach einem ersten Ausführungsbeispiel der Erfindung;
- Fig. 2:: die Verteilerleiste gemäß Fig. 1 in Draufsicht;
- Fig. 3:: einen Querschnitt durch die Verteilerleiste gemäß Fig. 1 und 2;
- Fig. 4:: die Schirmungseinrichtung der Verteilerleiste gemäß Fig. 1 und 2 in perspektivischer Ansicht;
- Fig. 5:: die Schirmungseinrichtung gemäß Fig. 4 in Draufsicht;
- Fig. 6:: eine Verteilerleiste eines erfindungsgemäßen Verteilerblocks zusammen mit einer Schirmungseinrichtung in perspektivischer Ansicht nach einem zweiten Ausführungsbeispiel der Erfindung;
- Fig. 7:: die Verteilerleiste gemäß Fig. 6 in Draufsicht;
- Fig. 8:: die Schirmungseinrichtung der Verteilerleiste gemäß Fig. 6 und 7 in perspektivischer Ansicht; und
- Fig. 9:: die Schirmungseinrichtung gemäß Fig. 8 in Draufsicht.

Die Erfindung betrifft einen Verteilerblock einer Telekommunikationseinrichtung, wobei ein solcher Verteilerblock eine insbesondere als Aufnahmewanne ausgebildete Aufnahmeeinrichtung umfasst, in der sandwichartig übereinander mehrere Verteilerleisten angeordnet sind. Die Verteilerleisten eines Verteilerblocks bilden Anschlusselemente, die einerseits dem Anschluss der Adern von Telekommunikationskabeln und andererseits der Verteilung der von den Telekommunikationskabeln übertragenen Datensignale dienen. Zwischen benachbarten Anschlusselementen sind Drahtführungselemente positioniert, um die Adern der Nachrichtenkabel Anschlüssen der Anschlusselemente zuzuführen.

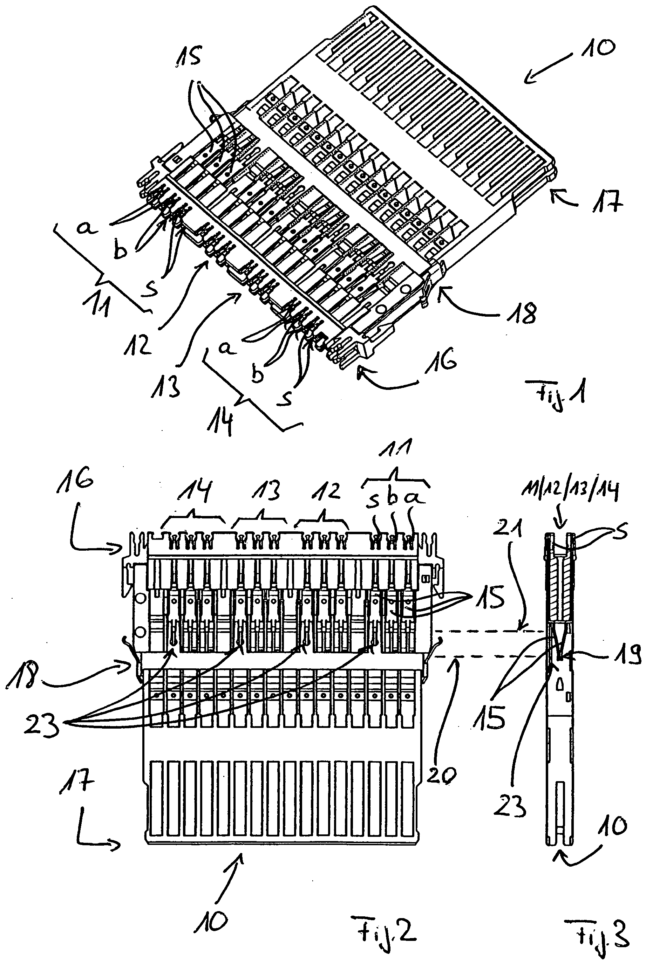

Fig. 1 bis 3 zeigen eine Verteilerleiste 10 eines Verteilerblocks nach einem ersten Ausführungsbeispiel der hier vorliegenden Erfindung, wobei die Verteilerleiste 10 mehrere Anschlusselemente 11, 12, 13 und 14 umfasst, die dem Anschluss von Kabeladern eines Telekommunikationskabels sowie der Verteilung der von den Kabeladern übertragenen Datensignale dient.

Die Verteilerleiste 10 bzw. die Anschlusselemente 11, 12, 13 und 14 umfassen Kontaktfedern 15, wobei jedes Anschlusselement Kontaktfedern 15 zur Bildung von a-Anschlüssen, Kontaktfedern 15 zur Bildung von b-Anschlüssen sowie Kontaktfedern 15 zur Bildung von s-Anschlüssen aufweist. An einer Vorderseite 16 der Verteilerleiste 10 positionierte Enden der Kontaktfedern 15 bilden die a-Anschlüsse, b-Anschlüsse und s-Anschlüsse derselben, die jeweils als IDC-Anschlüsse ausgebildet sind.

Die Kontaktfedern 15 der a-Anschlüsse, b-Anschlüsse und s-Anschlüsse eines jeden Anschlusselements 11, 12, 13 und 14 erstrecken sich ausgehend von diesen Anschlüssen und demnach ausgehend von der Vorderseite 16 der Verteilerleiste 10 in Richtung auf eine Rückseite 17 derselben und bilden in einem Abschnitt zwischen der Vorderseite 16 und der Rückseite 17 der Verteilerleiste 10 gemäß Fig. 3 Trennkontakte 19 aus. Im Bereich der Trennkontakte 19 berühren sich den jeweiligen Anschlüssen zugeordneten Kontaktfedern 15. Die a-Anschlüsse der Anschlusselemente 11, 12, 13 und 14 dienen dem Anschluss sogenannter a-Adern eines Telekommunikationskabels. Die b-Anschlüsse dienen hingegen dem Anschluss der sogenannten b-Adern und die s-Anschlüsse dem Anschluss der sogenannten s-Adern eines Telekommunikationskabels. Bei den a-Adern und b-Adern handelt es sich um die signalführenden Adern und bei den s-Anschlüssen um die nicht-signalführenden Adern eines Telekommunikationskabels.

Obwohl in Fig. 1 bis 3 nicht dargestellt, wirken mit den Anschlusselementen 11 bis 14 der Verteilerleiste vorzugsweise xDSL-Splittereinrichtungen zusammen, die über die Rückseite 17 der Verteilerleiste 10 mit den Kontaktfedern 15 der Anschlusselemente 11 bis 14 kontaktiert sind. Die Splittereinrichtungen sind verdrahtungslos bzw. verkabelungslos unmittelbar mit den Kontaktfedern 15 über die Rückseite derselben entweder lösbar oder unlösbar kontaktiert, so dass demnach die Splittereinrichtungen in die Verteilerieiste 10 integriert sind. Die Splittereinrichtungen sind vorzugsweise als VDSL-Splittereinrichtungen ausgebildet.

Wie bereits ausgeführt, dienen die s-Anschlüsse der Anschlusselemente 11, 12, 13 und 14 dem Anschluss nicht-signalführender s-Adern von Telekommunikationskabeln, wobei die s-Adern auch als Schirmungsadern bezeichnet werden. Zur Schirmung müssen die s-Anschlüsse bzw. die Kontaktfedern 15, welche an der Vorderseite 16 der Verteilerleiste 10 die s-Anschlüsse bereitstellen, elektrisch leitend mit der Aufnahmeeinrichtung des Verteilerblocks, die metallisch ausgebildet ist, kontaktiert werden.

Hierzu ist der Verteilerleiste der Fig. 1 bis 3 ein Schirmungselement 18 zugeordnet, welches die Kontaktfedern 15 der s-Anschlüsse elektrisch leitend mit der Aufnahmeeinrichtung des Verteilerblocks 10 kontaktiert.

Im Sinne der hier vorliegenden Erfindung kontaktiert das Schirmungselement 18 Kontaktfedern 15 der s-Anschlüsse der Anschlusselemente 11, 12, 13 und 14 derart, dass von der Vorderseite 16 der Verteilerleiste 10 aus gesehen die Kontaktierung der Kontaktfedern 15 über das Schirmungselement 18 vor den von den Kontaktfedern 15 gebildeten Trennkontakten 19 liegt.

Gemäß Fig. 2, 3 liegen die von den Kontaktfedern 15 ausgebildeten Trennkontakte 19 auf Höhe einer gedachten Linie 20, die Kontaktierung von Kontaktfedern 15 über das Schirmungselement 18 erfolgt auf Höhe einer gedachten Linie 21, wobei gemäß Fig. 2, 3 die gedachte Linie 21 zwischen der Vorderseite 16 der Verteilerleiste 10 und der gedachten Linie 20 liegt. Die Kontaktierung der Kontaktfedern 15 über das Schirmungselement 18 erfolgt demnach von der Vorderseite 16 der Verteilerleiste 10 aus gesehen vor den von den Kontaktfedern 15 ausgebildeten Trennkontakten 19.

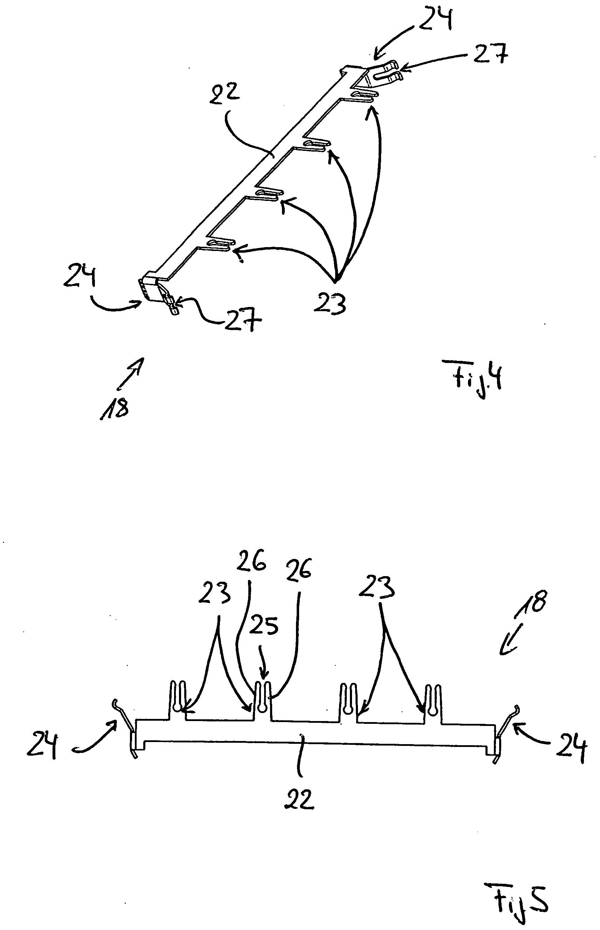

Fig. 4 und 5 zeigen das Schirmungselement 18 der Verteilerleiste 10 der Fig. 1 bis 3 in Alleindarstellung. So umfasst das Schirmungselement 18 einen sich über die Breite der Verteilerleiste 10 erstreckenden Steg 22, wobei vom Steg 22 einerseits Zungen 23 zur Kontaktierung der Kontaktfedern 15 der s-Anschlüsse und andererseits Schenkel 24 zur Kontaktierung der Aufnahmeeinrichtung des Verteilerblocks vorstehen.

Die Zungen 23 verfügen jeweils über durch einen mittigen Schlitz 25 voneinander getrennte Zungenhälften 26, wobei bei der Kontaktierung des Schirmungselements 18 mit den Kontaktfedern 15 der s-Anschlüsse in den Schlitz 25 der Zungen 23 ein pinartiger Vorsprung der Kontaktfedern 15 eingeführt wird.

Die Schenkel 24, über welche das Schirmungselement 18 mit der metallischen Aufnahmeeinrichtung des Verteilerblocks kontaktierbar ist, sind gemäß Fig. 4 und 5 jeweils als Doppelkontaktschenkel ausgeführt, wodurch sich der elektrische Kontaktwiderstand des Schirmungselements 18 zur Aufnahmewanne reduzieren lässt. Zur Ausbildung der Doppelkontaktschenkel ist in die Schenkel 24 jeweils ein Schlitz 27 eingebracht.

Wie Fig. 4 und 5 entnommen werden kann, stehen die Zungen 23 sowie die Schenkel 24 des Schirmungselements 18 in der gleichen Richtung gegenüber dem Steg 22 vor.

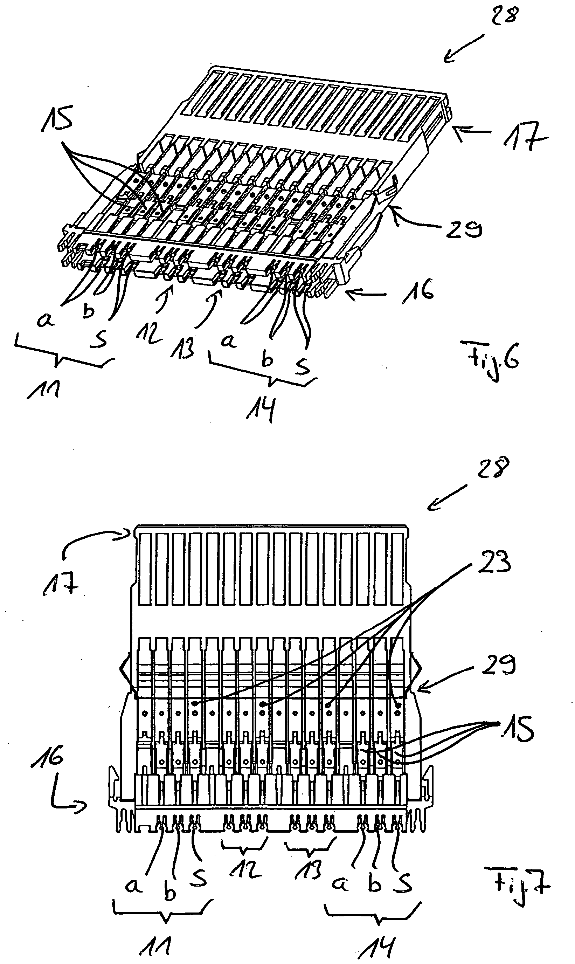

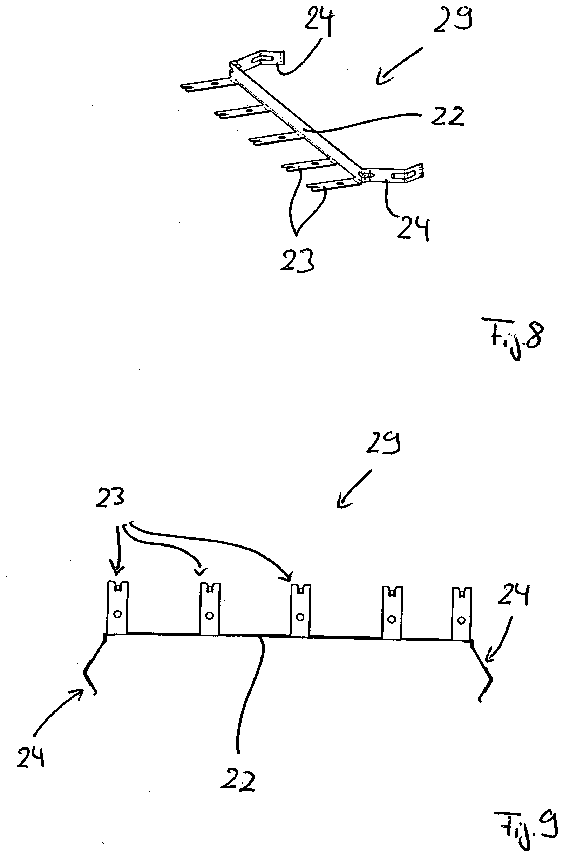

Fig. 6 und 7 zeigen eine Verteilerleiste 28 eines erfindungsgemäßen Verteilerblocks nach einem zweiten Ausführungsbeispiel der hier vorliegenden Erfindung, wobei sich die Verteilerleiste 28 der Fig. 6 und 7 von der Verteilerleiste 10 der Fig. 1 bis 3 im Wesentlichen nur durch das verwendete Schirmungselement 29 unterscheidet, weshalb nachfolgend zur Vermeidung unnötiger Wiederholungen für gleiche Baugruppen gleiche Bezugsziffern verwendet werden und nur auf die Details eingegangen wird, durch die sich das Ausführungsbeispiel der Fig. 6 bis 9 vom Ausführungsbeispiel der Fig. 1 bis 5 unterscheidet. Fig. 8 und 9 zeigen das Schirmungselement 29 der Verteilerleiste 28 der Fig. 6 und 7 in Alleindarstellung.

Im Ausführungsbeispiel der Fig. 6 bis 9 sind die Schenkel 24 des Schirmungselements 29, die der Kontaktierung desselben mit der Aufnahmewanne dienen, nicht als Doppelkontakte sondern vielmehr als Einzelkontakte ausgeführt. Ein weiterer Unterschied des Schirmungselements 29 besteht in der Ausführung der Zungen 23, die der Kontaktierung des Schirmungselements 29 mit den Kontaktfedern der s-Anschlüsse dienen. Das Schirmungselement 29 der Fig. 8 und 9 verfügt gegenüber dem Schirmungselement 18 der Fig. 4 und 5 über eine zusätzliche Zunge 23, wobei jedoch bei der Kontaktierung des Schirmungselements 29 mit den Kontaktfedern 15 der s-Kontakte der Anschlusselemente 11 bis 14 eine dieser Zungen 23 nicht benötigt wird.

Wie Fig. 8 und 9 entnommen werden kann, stehen beim Schirmungselement 29 der Fig. 8 und 9 die Zungen 23 und die Schenkel 24 in entgegengesetzten Richtungen vom Steg 25 vor.

Die Schirmungselemente 18 bzw. 29 sind vorzugsweise aus Edelstahl hergestellt.

Es liegt demnach im Sinne der hier vorliegenden Erfindung, Kontaktfedern der s-Anschlüsse von Anschlusselementen 11, 12, 13 und 14 einer Verteilerleiste über ein Schirmungselement 18 bzw. 29 mit der Aufnahmeeinrichtung eines Verteilerblocks elektrisch leitend zu kontaktieren, wobei die Kontaktierung der die s-Anschlüsse bereitstellenden Kontaktzungen 15 mit dem Schirmungselement 18 bzw. 29 von der Vorderseite der Verteilerleiste aus gesehen vor den von den Kontaktfedern 15 gebildeten Trennkontakten 19 erfolgt. Hierdurch kann unerwünschtes Nahnebensprechen reduziert werden.

### Bezugszeichenliste

- 10: Verteilerleiste
- 11: Anschlusselement
- 12: Anschlusselement
- 13: Anschlusselement
- 14: Anschlusselement
- 15: Kontaktfeder
- 16: Vorderseite
- 17: Rückseite
- 18: Schirmungselement
- 19: Trennkontakt
- 20: Linie
- 21: Linie
- 22: Steg
- 23: Zunge
- 24: Schenkel
- 25: Schlitz
- 26: Zungenhälfte
- 27: Schlitz
- 28: Verteilerleiste
- 29: Schirmungselement

## Patentansprüche

1. Verteilerblock einer Telekommunikationseinrichtung, mit mehreren in einer Aufnahmeeinrichtung, insbesondere in einer Aufnahmewanne, übereinander oder nebeneinander angeordneten Verteilerleisten (10), wobei die Verteilerleisten (10) Anschlusselemente (11, 12, 13, 14) umfassen, wobei jedes Anschlusselement (11, 12, 13, 14) mehrere Kontaktfedern (15) umfasst, die an einer Vorderseite (16) der jeweiligen Verteilerleiste (10) a-Anschlüsse und b-Anschlüsse zur Kontaktierung mit signalführenden a-Adern und b-Adern sowie s-Anschlüsse zur Kontaktierung mit nicht-signalführenden s-Adern von Telekommunikationskabeln bilden, wobei jeder Verteilerleiste (10) ein Schirmungselement (18; 29) zugeordnet ist, um den s-Anschlüssen zugeordnete Kontaktfedern (15) der Anschlusselemente (11, 12, 13, 14) mit der Aufnahmeeinrichtung elektrisch leitend zu verbinden, **dadurch gekennzeichnet, dass** jedes Schirmungselement (18; 29) den s-Anschlüssen zugeordnete Kontaktfedern (15) der Anschlusselemente von der Vorderseite (16) der Verteilerleiste aus gesehen vor den von den Kontaktfedern (15) gebildeten Trennkontakten (19) kontaktiert.

2. Verteilerblock nach Anspruch 1, **dadurch gekennzeichnet, dass** jedes Schirmungselement (18; 29) einen sich über die Breite einer Verteilerleiste erstreckenden Steg (22) umfast, wobei gegenüber dem Steg einerseits Zungen (23) zur Kontaktierung der den s-Anschlüssen zugeordneten Kontaktfedern und anderseits Schenkel (24) zur Kontaktierung der Aufnahmeeinrichtung vorstehen.

3. Verteilerblock nach Anspruch 2, **dadurch gekennzeichnet, dass** das die Zungen (23) und die Schenkel (24) des Schirmungselements (29) in entgegengesetzten Richtungen gegenüber dem Steg (22) vorstehen.

4. Verteilerblock nach Anspruch 2, **dadurch gekennzeichnet, dass** das die Zungen (23) und die Schenkel (24) des Schirmungselements (18) in der gleichen Richtung gegenüber dem Steg (22) vorstehen.

5. Verteilerblock nach einem der Ansprüche 2 bis 4, **dadurch gekennzeichnet, dass** die Schenkel (24) als Doppelkontaktschenkel ausgebildet sind.

6. Verteilerblock nach einem der Ansprüche 2 bis 4, **dadurch gekennzeichnet, dass** die Schenkel (24) als Einfachkontaktschenkel ausgebildet sind.

7. Verteilerblock nach einem der Ansprüche 1 bis 6, **dadurch gekennzeichnet, dass** jedes Schirmungselement (18, 29) aus Edelstahl gebildet ist.

8. Verteilerblock nach einem der Ansprüche 1 bis 7, **dadurch gekennzeichnet, dass** in denselben xDSL-Splittereinrichtungen, insbesondere VDSL-Splittereinrichtungen, integriert sind.

## Claims

1. Distribution block of a telecommunication device, having a plurality of distribution strips (10) arranged above one another or beside one another in an accommodating device, in particular in an accommodating trough, the distribution strips (10) comprising connection elements (11, 12, 13, 14), each connection element (11, 12, 13, 14) comprising a plurality of contact springs (15) which, on a front side (16) of the respective distribution strip (10), form a-connections and b-connections for making contact with signal-carrying a-wires and b-wires and s-connections for making contact with non-signal-carrying s-wires of telecommunication cables, each distribution strip (10) being assigned a shielding element (18; 29) in order to connect contact springs (15) of the connection elements (11, 12, 13, 14) which are assigned to the s-connections to the accommodating device in an electrically conductive manner, **characterized in that** each shielding element (18; 29) makes contact with contact springs (15) of the connection elements which are assigned to the s-connections before the isolating contacts (19) formed by the contact springs (15), as seen from the front side (16) of the distribution strip.

2. Distribution block according to Claim 1, **characterized in that** each shielding element (18; 29) comprises a web (22) extending over the width of a distribution strip, tongues (23) for making contact with the contact springs assigned to the s-connections, on the one hand, and limbs (24) for making contact with the accommodating device, on the other hand, protruding with respect to the web.

3. Distribution block according to Claim 2, **characterized in that** the tongues (23) and the limbs (24) of the shielding element (29) protrude in opposite directions with respect to the web (22).

4. Distribution block according to Claim 2, **characterized in that** the tongues (23) and the limbs (24) of the shielding element (18) protrude in the same direction with respect to the web (22).

5. Distribution block according to one of Claims 2 to 4, **characterized in that** the limbs (24) are in the form of double-contact limbs.

6. Distribution block according to one of Claims 2 to 4, **characterized in that** the limbs (24) are in the form of single-contact limbs.

7. Distribution block according to one of Claims 1 to 6, **characterized in that** each shielding element (18, 29) is formed from stainless steel.

8. Distribution block according to one of Claims 1 to 7, **characterized in that** xDSL splitter devices, in particular VDSL splitter devices, are integrated in said distribution block.

## Revendications

1. Bloc répartiteur d'un dispositif de télécommunication, comportant plusieurs rails de répartition (10) disposés les uns au-dessus des autres ou les uns à côté des autres dans un dispositif de logement, notamment dans un panier de logement, dans lequel les rails de répartition (10) comprennent des éléments de raccordement (11, 12, 13, 14), dans lequel chaque élément de raccordement (11, 12, 13, 14) comprend plusieurs ressorts de contact (15) qui forment sur la face avant (16) des rails de répartition (10) respectifs des fils a et des fils b acheminant des signaux ainsi que des bornes s destinées à être mises en contact avec des fils s n'acheminant pas de signaux de câbles de télécommunications, dans lequel un élément de blindage (18 ; 29) est associé à chaque rail de répartition (10) afin de relier de manière électriquement conductrice des ressorts de contact (15) associés aux bornes s des éléments de raccordement (11, 12, 13, 14) au dispositif de logement, **caractérisé en ce que** chaque élément de blindage (18 ; 29) est en contact avec les ressorts de contact (15) associés aux bornes s des éléments de raccordement tels qu'ils sont vus depuis la face avant (16) des rails de répartition à l'avant des contacts de séparation (19) formés par les ressorts de contact (15).

2. Bloc répartiteur selon la revendication 1, **caractérisé en ce que** chaque élément de blindage (18 ; 29) comprend une âme (22) s'étendant sur la largeur d'un rail de répartition, dans lequel des languettes (23) destinées à être mises en contact avec les ressorts de contact associés aux bornes s, d'une part, et des branches (24) destinées à être mises en contact avec le dispositif de logement, d'autre part, font saillie par rapport à l'âme.

3. Bloc répartiteur selon la revendication 2, **caractérisé en ce que** les languettes (23) et les branches (24) de l'élément de blindage (29) font saillie dans des directions opposées par rapport à l'âme (22).

4. Bloc répartiteur selon la revendication 2, **caractérisé en ce que** les languettes (23) et les branches (24) de l'élément de blindage (18) font saillie dans la même direction par rapport à l'âme (22).

5. Bloc répartiteur selon l'une quelconque des revendications 2 à 4, **caractérisé en ce que** les branches (24) sont réalisées sous la forme de doubles branches de contact.

6. Bloc répartiteur selon l'une quelconque des revendications 2 à 4, **caractérisé en ce que** les branches (24) sont réalisées sous la forme de branches à un seul contact.

7. Bloc répartiteur selon l'une quelconque des revendications 1 à 6, **caractérisé en ce que** chaque élément de blindage (18, 29) est constitué d'acier inoxydable.

8. Bloc répartiteur selon l'une quelconque des revendications 1 à 7, **caractérisé en ce que** des dispositifs séparateurs xDSL, notamment des dispositifs séparateurs VDSL, sont intégrés à celui-ci.
